# EUROPÄISCHE PATENTSCHRIFT

(11) **EP 0 914 893 B1**
(45) Veröffentlichungstag und Bekanntmachung des Hinweises auf die Patenterteilung: **16.06.2004**
(21) Anmeldenummer: 98811007.8
(22) Anmeldetag: 07.10.1998
(51) Int. Cl.: B23D 57/00, B23D 61/18

(54) **Handgeführte Drahtsäge**
Hand held wire saw
Scie à fil à main

(30) Priorität: 05.11.1997 DE 19748809
(43) Veröffentlichungstag der Anmeldung: 12.05.1999
(73) Patentinhaber: HILTI Aktiengesellschaft, 9494 Schaan (LI)
(72) Erfinder: Eriksson, Thomas, 79015 Schweden (SE); Schittl, Josef, 6712 Thüringen (AT)
(74) Vertreter: Wildi, Roland

(56) Entgegenhaltungen:
- EP-A- 0 060 971
- WO-A-88/09251
- WO-A-96/04093
- US-A- 3 598 101
- PATENT ABSTRACTS OF JAPAN vol. 016, no. 107 (M-1222), 17. März 1992 (1992-03-17) -& JP 03 281119 A (MITSUBISHI MATERIALS CORP;OTHERS: 01), 11. Dezember 1991 (1991-12-11)
- PATENT ABSTRACTS OF JAPAN vol. 006, no. 196 (M-161), 5. Oktober 1982 (1982-10-05) -& JP 57 102721 A (OISHI ENG:KK), 25. Juni 1982 (1982-06-25)

## Beschreibung

Die Erfindung betrifft ein handgeführtes Schneidgerät für die Bearbeitung von Gestein, Beton oder dergleichen gemäss dem Oberbegriff des Patentanspruchs 1.

Aus der EP-0 060 971 ist ein handgeführtes Schneidgerät für die Bearbeitung von Gestein, Beton oder dergleichen bekannt. Das Schneidgerät weist eine Schneideinrichtung auf, die von einem ringförmigen Trägerkörper und mehreren gleichmässig am Umfang des Trägerkörpers verteilt angeordneten Schneidkörpem gebildet ist. Der ringförmige Trägerkörper wirkt mit Antriebs- und Führungselementen zusammen, die ausserhalb des Rotationszentrums des ringförmigen Trägerkörpers angeordnet sind. Dadurch lassen sich sehr grosse Schnittiefen erreichen.

Die Beschaffungskosten für diese bekannte Schneideinrichtung sind sehr hoch, da deren Herstellung in mehreren hintereinander folgenden Arbeitsstufen erfolgt. In einer ersten Arbeitsstufe wird der ringförmige Trägerkörper hergestellt. Das Anbringen der Schneidkörper am Umfang des Trägerkörpers erfolgt in einer zweiten Arbeitsstufe und ein Auswuchten der gesamten Schneideinrichtung geschieht in einer dritten Arbeitsstufe.

Wenn die Schneidkörper dieser Schneideinrichtung verschlissen sind, muss die gesamte Schneideinrichtung ausgetauscht werden. Um den ringförmigen Trägerkörper von dem Schneidgerät bzw. von dem Antriebsrad und den Führungsrollen trennen zu können, muss zumindest eine Führungsrolle unter Zuhilfenahme eines geeigneten Werkzeuges in einer Weise versetzt werden, dass der Trägerkörper gegenüber dem Antriebsrad und einer weiteren Führungsrolle seitlich versetzt und von dem Schneidgerät entfernt werden kann. Der Einbau einer neuen Schneideinrichtung in das Schneidgerät erfolgt in der umgekehrten Reihenfolge wie der Ausbau. Beim Einrichten der zuvor versetzten Führungsrolle ist darauf zu achten, dass es zu keiner Verklemmung bzw. zu keinem grossen Spiel zwischen der Führungsrolle und dem Trägerkörper kommt. Neben den hohen Beschaffungskosten für die Schneideinrichtung wirken sich auch die für die Demontage und Montage der Schneideinrichtung anfallenden Kosten negativ auf die Wirtschaftlichkeit dieses bekannten, handgeführten Schneidgerätes aus.

Aus der WO 88/09251 A1 ist eine Schneideinrichtung, wie ein Kreissägeblatt oder ein Kettensägeband, bekannt, bei welchem die Schneidkörper an einem seilförmigen Grundkörper aufgebracht und lösbar an dem äusseren Umfang des scheibenförmigen Trägerkörpers befestigt sind. Diese Schneideinrichtung weist den Vorteil auf, dass verschlissene Schneidkörper von dem Trägerkörper entfernt und durch neue Schneidkörper ersetzt werden können. Der Trägerkörper ist mehrmals verwendbar. Nachteilig an dieser Lösung ist, dass der Einund Ausbau der Schneideinrichtung, wie bei der EP-0 060 971, einen erheblichen Aufwand darstellt.

Der Erfindung liegt die Aufgabe zugrunde, ein handgeführtes Schneidgerät zu schaffen, das wirtschaftlich herstellbar ist, eine hohe Schneidleistung aufweist und bei dem die Schneidkörper der Schneideinrichtung schnell und einfach auswechselbar sind.

Die Lösung dieser Aufgaben besteht in einem handgeführten Schneidgerät, welches die im kennzeichnenden Abschnitt des Patentanspruchs 1 angeführten Merkmale aufweist. Die erfindungsgemäss angeordneten Schneidkörper sind beispielsweise hohlzylinderförmig ausgebildet und im Abstand voneinander mit einer aus mehreren Litzen bestehenden Stahlseele verbunden. Zwischen den Schneidkörpem befinden sich Distanzelemente, beispielsweise in Form von Druckfedern, die beispielweise in einer Schicht aus Gummi eingebettet sind. Dieses Schneidwerkzeug ist wirtschaftlich herstellbar und daher äusserst preisgünstig in der Beschaffung. Das Schneidwerkzeug ist schnell, einfach und sicher seitlich von dem Trägerkörper sowie dem Antriebsrad abnehmbar bzw. seitlich auf den Trägerkörper und das Antriebsrad aufsetzbar.

Damit das Schneidwerkzeug nicht aus der Vertiefung des ringförmigen Trägerkörpers springen kann, wirkt das Schneidwerkzeug mit einer eine Vorspannung erzeugenden Spannvorrichtung zusammen.

Die Vorspannung wird mit wenigstens einem Federelement erzeugt das die Spannvorrichtung in wenigstens eine Richtung versetzt. Mit Hilfe dieses Federelementes wird eine im wesentlichen gleichbleibende Vorspannung erzeugt, die insbesondere zu einem schwingungsfreien Verhalten des Schneidwerkzeuges führt, wenn die Bearbeitung eines Untergrundes erfolgt.

Um Reibungsverluste zwischen der Spannvorrichtung und dem Schneidwerkzeug zu verhindern, weist vorteilhafterweise die Spannvorrichtung eine drehbar gelagerte Rolle mit einer umlaufend ausgebildeten Vertiefung auf, die ebenfalls wie der ringförmige Trägerkörper der Führung des Schneidwerkzeuges dient.

Die Schneidkörper des Schneidwerkzeuges haben beispielsweise eine zylindrische Kontur. Um ein gleichmässiges Abnützen dieser Schneidkörper erreichen zu können, erstreckt sich zweckmässigerweise die Vertiefung der Rolle in einer Ebene, die gegenüber jener Ebene in der sich die Vertiefung des ringförmigen Trägerkörpers erstreckt, parallel versetzt angeordnet ist. Der Betrag dieser parallelen Versetzung kann beispielsweise 0,5 mm bis 10 mm betragen. Im Betrieb des Schneidgerätes bewirken diese versetzt zueinander angeordneten Vertiefungen ein Verdrehen des Schneidwerkzeuges in der Weise, dass sich die Kontur der Schneidkörper in den Vertiefungen abwälzt. Auf diese Weise nützt sich der Umfang der Schneidkörper gleichmässig ab.

Um eine Beschädigung insbesondere der Vertiefungen des ringförmigen Trägerkörpers und Rolle verhindern zu können, ist zumindest zwischen dem ringförmigen Trägerkörper und dem Schneidwerkzeug ein endlos ausgebildetes Übertragungselement angeordnet, das den direkten Kontakt des Schneidwerkzeuges insbesondere mit dem Trägerkörper und der Rolle verhindert.

Ein Übertragungselement mit sehr hohen flexiblen Eigenschaften wird vorzugsweise von einem Riemen gebildet, dessen Innenkontur im wesentlichen der Kontur der beiden Vertiefungen und dessen Aussenkontur im wesentlichen der Kontur des Schneidwerkzeuges entspricht.

Um das Schneidgerät möglichst klein und mit wenig Einzelteilen bauen zu können, erfolgt zweckmässigerweise der Antrieb des Schneidwerkzeuges mittels eines Antriebsrades, das zumindest mit dem ringförmigen Trägerkörper zusammenwirkt.

Eine Erhöhung der Reibkraft zwischen dem Antriebsrad und dem ringförmigen Trägerkörper wird vorteilhafterweise dadurch erreicht, dass das Antriebsrad unter Zwischenlage des Übertragungselementes mit dem ringförmigen Trägerkörper zusammenwirkt.

Um die Baugrösse des Schneidgerätes möglichst klein halten zu können. ist vorteilhafterweise das Antriebsrad von einer Führungsrolle gebildet, die neben wenigstens zwei weiteren Stützrollen ausserhalb vom Rotationszentrum des ringförmigen Trägerkörpers angeordnet ist.

Die Erfindung wird anhand von Zeichnungen, die mehrere Ausführungsbeispiele wiedergeben, näher erläutert. Es zeigen:
- Fig. 1: ein erfindungsgemässes handgeführtes Schneidgerät in der Seitenansicht mit geöffneter Abdeckung;
- Fig. 2: einen vergrössert dargestellten Schnitt entlang der Linie II-II gemäss Fig. 1;
- Fig. 3: einen vergrössert dargestellten Schnitt entlang der Linie III-III gemäss Fig. 1;
- Fig. 4: einen vergrössert dargestellten Schnitt entlang der Linie IV-IV gemäss Fig. 1;
- Fig. 5: ein weiteres erfindungsgemässes, handgeführtes Schneidgerät in der Seitenansicht mit geöffneter Abdeckung;
- Fig. 6: einen vergrössert dargestellten Schnitt entlang der Linie VI-VI gemäss Fig. 5;
- Fig. 7: einen vergrössert dargestellten Schnitt entlang der Linie VII-VII gemäss Fig. 5;
- Fig. 8: einen vergrössert dargestellten Schnitt entlang der Linier VIII-VIII gemäss Fig. 5.

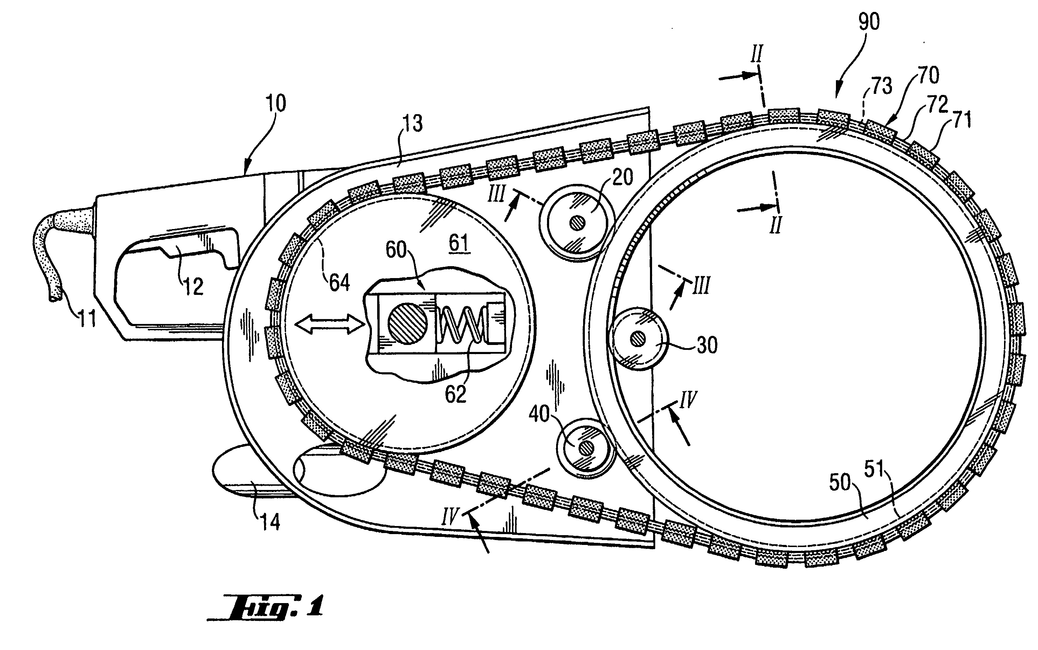

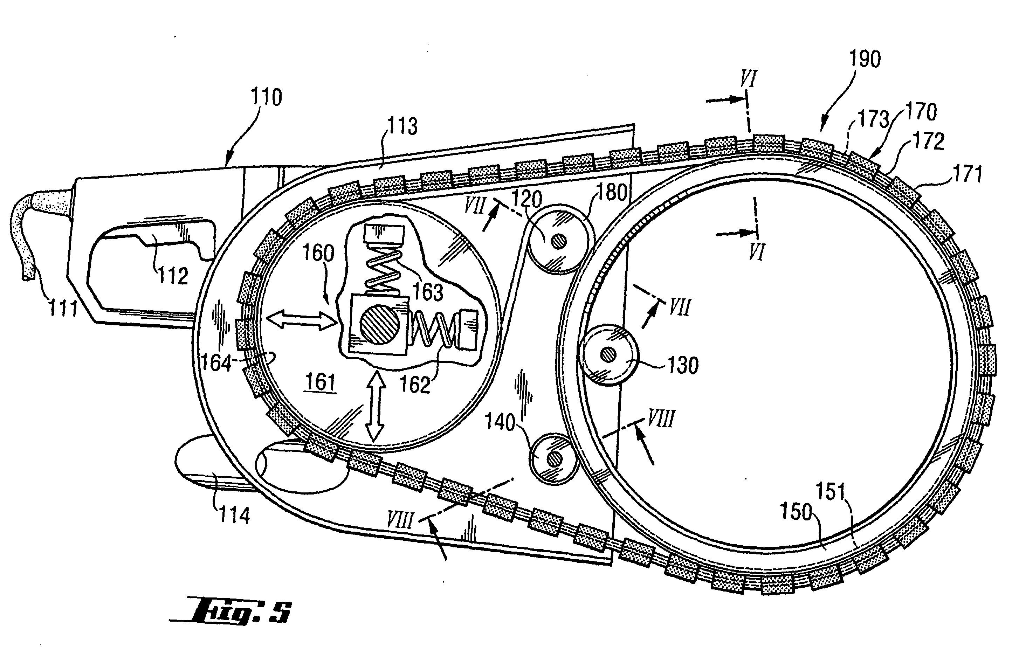

Die Fig. 1 und 5 stellen jeweils ein handgeführtes Schneidgerät dar, das der Bearbeitung von Gestein, Beton oder dergleichen dient. Das Schneidgerät weist ein Gehäuse 10, 110 mit einem Handgriff auf, an dem sich ein Betätigungsschalter 12, 112 zur Inbetriebnahme des Schneidgerätes befindet. Eine nicht dargestellte Antriebseinrichtung, beispielsweise in Form eines Elektromotors, befindet sich im Innern des Gehäuses 10, 110 und ist mittels einer elektrischen Verbindungsleitung 11, 111 mit einer externen Stromquelle in Verbindung bringbar. Seitlich am Gehäuse 10, 110 befindet sich eine Abdeckung 13, 113, die auf der dem Gehäuse 10, 110 abgewandten Seite mittels eines nicht dargestellten Verschlussdeckels abdeckbar ist. Im Bereich des Handgriffes weist diese Abdeckung 13, 113 einen Anschlusstutzen 14, 114 auf, der über einen nicht dargestellten Schlauch mit einer ebenfalls nicht dargestellten Absaugvorrichtung in Verbindung bringbar ist. In das Innere der Abdeckung 13, 113 ragt ein Antriebsrad 20, 120, das von der Antriebseinrichtung in Drehung versetzbar ist.

Im Innern der Abdeckung 13, 113 befinden sich neben dem Antriebsrad 20, 120 eine äussere Führungsrolle 40, 140, eine innere Führungsrolle 30, 130 und eine Spannvorrichtung 60, 160. Die Abdeckung 13, 113 ist auf der dem Handgriff gegenüberliegenden Seite mit einer Öffnung versehen. Eine Schneideinrichtung 90, 190, die von einem ringförmigen Trägerkörper 50, 150 und einem bandförmig sowie endlos ausgebildeten Schneidwerkzeug 70, 170 gebildet ist ragt durch diese Öffnung teilweise in das Innere der Abdeckung 13, 113.

Der Trägerkörper 50, 150 ist mit Hilfe des Antriebsrades 20, 120, der inneren Führungsrolle 30, 130 und der äusseren Führungsrolle 40, 140 drehbar gelagert und seitlich geführt. Das Antriebsrad 20, 120 und die beiden Führungsrollen 30, 40, 130, 140 sind ausserhalb eines Rotationszentrums des ringförmigen Trägerkörpers 50, 150 angeordnet und wirken an drei verschiedenen Stellen mit dem Trägerkörper 50, 150 zusammen.

Der Trägerkörper 50, 150 weist an seinem Umfang eine umlaufend ausgebildete Vertiefung 51, 151 auf, die der Führung des Schneidwerkzeuges 70, 170 dient. Das Schneidwerkzeug 70, 170 wirkt mit einer im Innem der Abdeckung 13, 113 angeordneten Spannvorrichtung 60, 160 zusammen, die das Schneidwerkzeug 70, 170 unter Vorspannung hält. Die Spannvorrichtung weist eine drehbar gelagerte Rolle 61, 161 auf, die am Umfang mit einer Vertiefung 64, 164 versehen ist. Diese Vertiefung 64, 164 dient der Führung des Schneidwerkzeuges 70, 170 und weist eine Kontur auf, die im wesentlichen der Kontur des Schneidwerkzeuges 70, 170 entspricht.

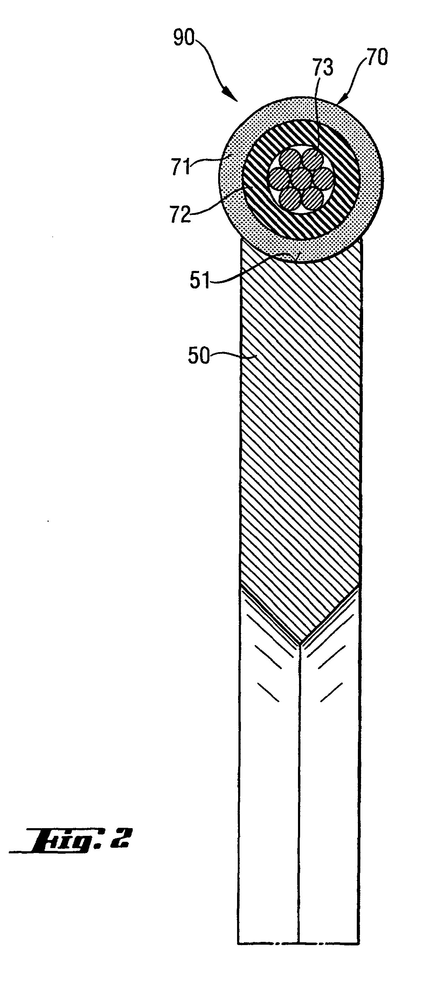

Das in den Fig. 1, 2, 3, 5, 6, 7 dargestellte Schneidwerkzeug 70, 170 wird gebildet von einer aus mehreren einzelnen Litzen bestehenden Stahlseele 73, 173, mehreren auf der Stahlseele 73, 173 aufgefädelten Perlen in Form von zylindrischen Schneidkörpern 71, 171 und mehreren zwischen den Schneidkörpern 71, 171 angeordneten Distanzelementen 72, 172, die sich in einem Gummibett befinden. Die freien Enden der Stahlseele 73, 173 sind beispielsweise miteinander verflechtet, damit sich ein endloses Schneidwerkzeug 70, 170 ergibt.

Die Fig. 1 zeigt, dass die Vorspannung des Schneidwerkzeuges 70 mit einem Federelement 62 erreicht wird, das sich an der versetzbaren Rolle 61 und an einem Anschlag der Abdeckung 13 abstützt, der sich zwischen der Rolle 61 und dem ringförmigen Trägerkörper 50 befindet.

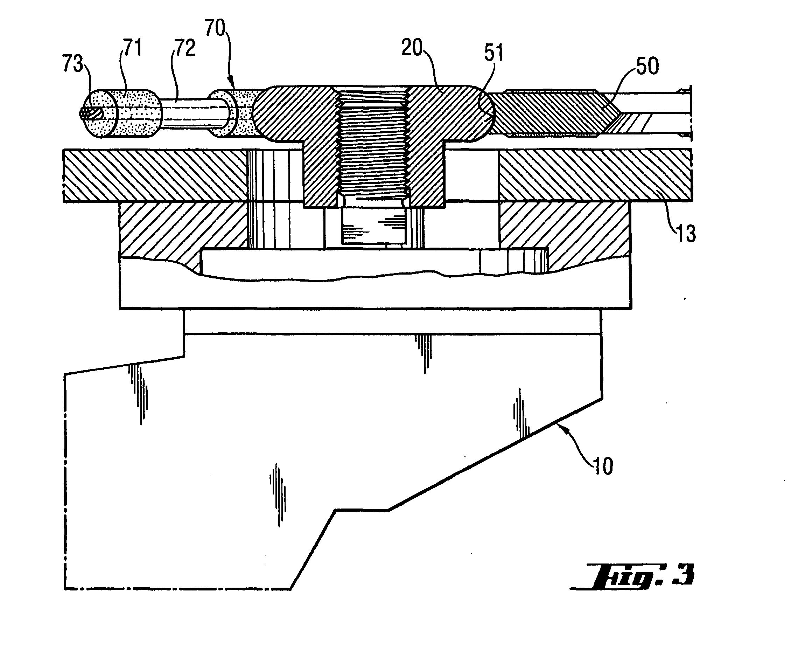

Das in den Fig. 1 und 3 dargestellte Antriebsrad 20 wirkt mit dem ringförmigen Trägerkörper 50 kraftschlüssig zusammen so dass eine Drehbewegung von dem Antriebsrad 20 auf den ringförmigen Trägerkörper 50 übertragen werden kann. Mittels einer Gewindeverbindung ist das Antriebsrad 20 mit einer Abtriebswelle der nicht dargestellten Antriebseinrichtung des Schneidgerätes verbunden. Der parallel zur Mittelachse des Antriebsrades 20 verlaufende Querschnitt weist eine Aussenkontur auf, die im wesentlichen der Vertiefung 51 des ringförmigen Trägerkörpers 50 entspricht.

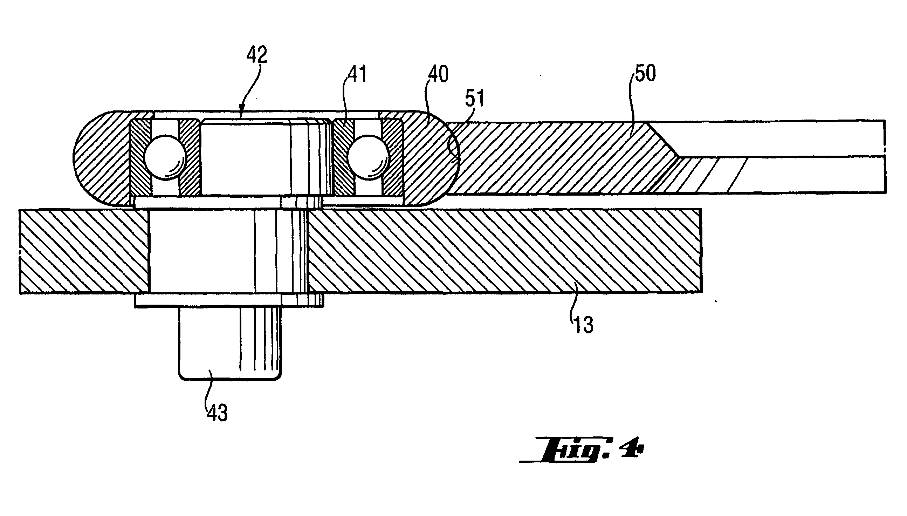

Eine im wesentlichen gleiche Aussenkontur wie das Antriebsrad 20 weist die in den Fig. 1 und 4 dargestellte äussere Führungsrolle 40 auf. Diese Führungsrolle 40 ist mit einer zentralen Durchgangsbohrung versehen, in der sich ein Lagerelement 41 in Form eines Kugellagers befindet, das mit einem Zapfen eines Exzenterelementes 42 zusammenwirkt. Mit Hilfe dieses Exzenterelementes 42 ist die äussere Führungsrolle 40 gegenüber dem ringförmigen Trägerkörper 50 mindestens soweit im wesentlichen radial versetzbar, dass das Antriebsrad 20 nicht mehr in die Vertiefung 51 des Trägerkörpers 50 ragt. Auf diese Weise ist der Trägerkörper 50 gegenüber dem Antriebsrad 20 und der inneren Führungsrolle in der Weise verschwenkbar, dass deren Aussenkonturen nicht mehr mit dem Trägerkörper 50 zusammenwirken.

Der ringförmige Trägerkörper 50 weist eine sich in Richtung Zentrum verjüngende Innenkontur auf. Mit einer entsprechenden Gegenkontur ist die innere Führungsrolle 30 versehen.

Bei dem in Fig. 5 dargestellten, handgeführten Schneidgerät befindet sich zwischen dem Schneidwerkzeug 170 und dem ringförmigen Trägerkörper 150 sowie zwischen dem Schneidwerkzeug 170 und der Rolle 161 der Spanneinrichtung 160 ein endlos ausgebildetes Übertragungselement 180 das im wesentlichen die Form eines Riemens hat. Dieses Übertragungselement 180 umschlingt zudem teilweise das Antriebsrad 120 und erstreckt sich zwischen dem Antriebsrad 120 und dem ringförmigen Trägerkörper 150 sowie zwischen der äusseren Führungsrolle 140 und dem ringförmigen Trägerkörper 150.

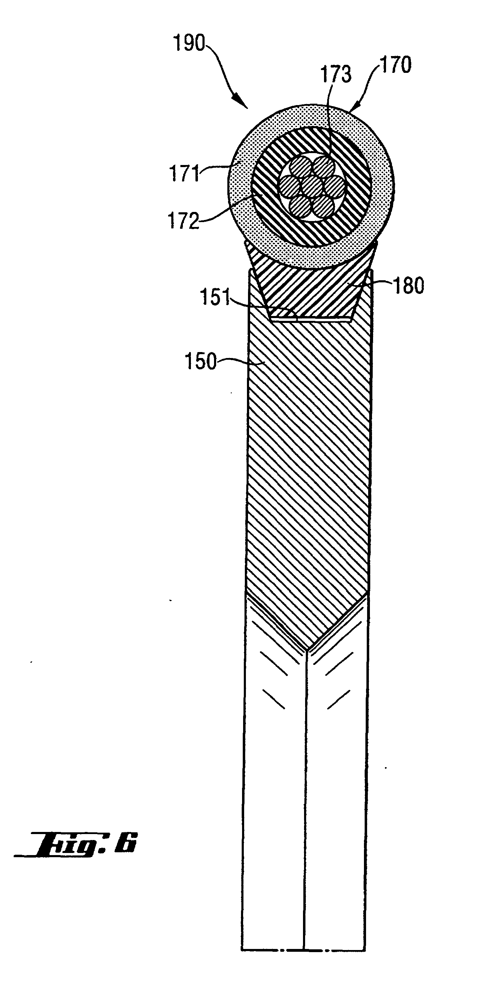

Wie aus den Fig. 6, 7 und 8 ersichtlich ist, weist der ringförmige Trägerkörper 150 eine umlaufend ausgebildete Vertiefung 151 mit einem im wesentlichen trapezförmigen Querschnitt auf, in die das Übertragungselement 180 wenigstens teilweise ragt.

Die Innenkontur des Übertragungselementes 180 entspricht im wesentlichen der Kontur der beiden Vertiefungen 151, 164 und die Aussenkontur entspricht im wesentlichen der Kontur des Schneidwerkzeuges 170.

Die in Fig. 5 dargestellte, mit dem ringförmigen Trägerkörper 150 zusammenwirkende, äussere Führungsrolle 140 weist einen Umfangsbereich mit einer auf die Kontur der Vertiefung 151 des Trägerkörpers 150 abgestimmten Aussenkontur auf.

Wie aus der Fig. 5 entnehmbar, ist wirkt die Spannvorrichtung 160 mit einem ersten Federelement 162 und einem zweiten Federelement 163 zusammen. Mit der Kraft des ersten Federelementes 162 wird zumindest die Rolle 161 der Spannvorrichtung 160 vom ringförmigen Trägerkörper 150 in einer ersten Richtung wegbewegt, so dass das von der Rolle 161 und dem ringförmigen Trägerkörper 150 geführte Schneidwerkzeug 170 vorgespannt wird. Mit der Kraft des zweiten Federelementes 163 ist die Rolle 161 in eine zweite Richtung versetzbar, die im wesentlichen senkrecht zur Wirkrichtung des ersten Federelementes 162 verläuft. Beim Versetzen der Rolle 161 in die zweite Richtung wird der Abstand zwischen der Rolle 160 und dem Antriebsrad 120 immer grösser und das Übertragungselement 180 immer mehr vorgespannt.

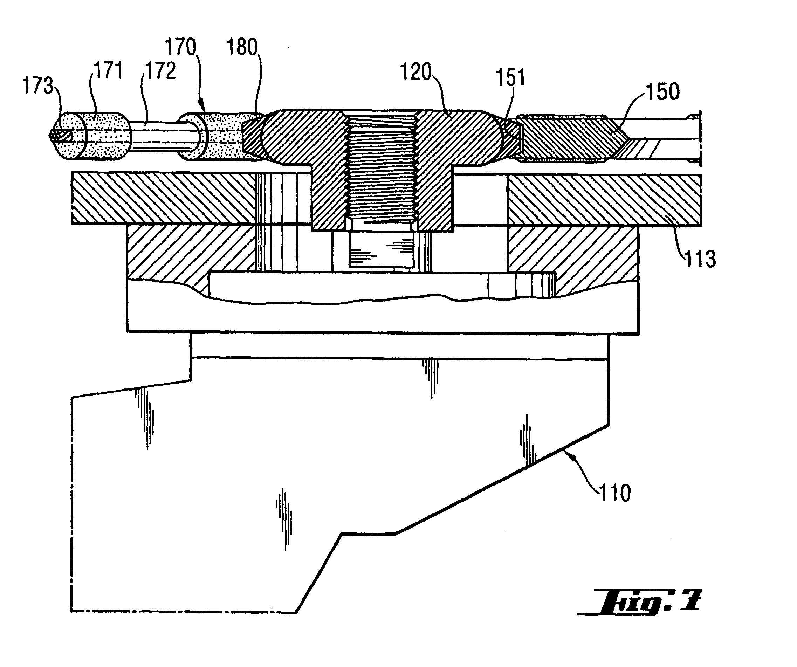

Das in den Fig. 5 und 7 dargestellte Antriebsrad 120 wirkt mit dem ringförmigen Trägerkörper 150 unter Zwischenlage des Übertragungselementes 180 kraftschlüssig zusammen, so dass eine Drehbewegung von dem Antriebsrad 120 auf den ringförmigen Trägerkörper 150 übertragen werden kann. Mittels einer Gewindeverbindung ist das Antriebsrad 120 mit einer Abtriebswelle der nicht dargestellten Antriebseinrichtung des Schneidgerätes verbunden. Der parallel zur Mittelachse des Antriebsrades 120 verlaufende Querschnitt weist eine Aussenkontur auf, die im wesentlichen der Kontur der Vertiefung 151 des ringförmigen Trägerkörpers 150 entspricht.

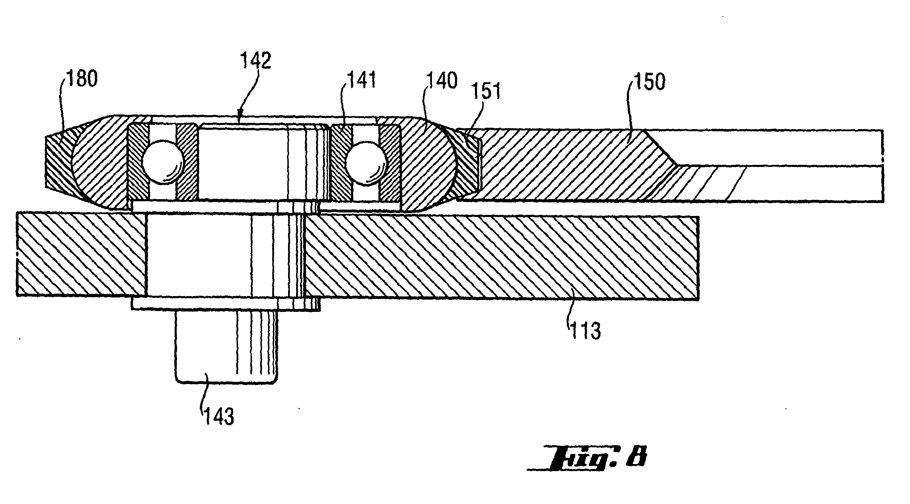

Eine im wesentlichen gleiche Aussenkontur wie das Antriebsrad 20 weist die in den Fig. 5 und 8 dargestellte äussere Führungsrolle 140 auf. Diese Führungsrolle 140 besitzt eine zentrale Durchgangsbohrung, in der sich ein Lagerelement 141 in Form eines Kugellagers befindet, das mit einem Zapfen eines Exzenterelementes 42 zusammenwirkt. Der Trägerkörper 150 ist von dem Schneidgerät entfembar, indem das mit dem Exzenterelement 142 zusammenwirkende Befestigungselement 143 mittels eines geeigneten Werkzeuges gelöst und das Exzenterelement 142 in Umfangsrichtung verdreht wird. Dabei wird die äussere Führungsrolle 140 von dem ringförmigen Trägerkörper 150 wegbewegt, so dass diese nicht mehr in die Vertiefung 151 des Trägerkörpers 150 ragt. Auf diese Weise wird die Führung des Trägerkörpers 150 aufgehoben, so dass der Trägerkörper 150 gegenüber dem Antriebsrad 120 und der inneren Führungsrolle 130 verschwenkbar und von diesen beiden Teilen entfembar ist. Der ringförmige Trägerkörper 150 weist eine sich in Richtung Zentrum verjüngende Innenkontur auf. Mit einer entsprechenden Gegenkontur ist die innere Führungsrolle 130 versehen.

## Patentansprüche

1. Handgeführtes Schneidgerät für die Bearbeitung von Gestein, Beton oder dergleichen mit einer Schneideinrichtung (90, 190), die einen drehbaren, ringförmigen Trägerkörper (50, 150) und mehrere Schneidkörper (71, 171) aufweist, die mit wenigstens einem Teil des Umfangs des Trägerkörpers (50, 150) zusammenwirken, **dadurch gekennzeichnet, dass** die Schneidkörper (71, 171) Teil eines bandförmig und endlos ausgebildeten Schneidwerkzeuges (70, 170) sind, das mit einer umlaufend ausgebildeten Vertiefung (51, 151) des ringförmigen Trägerkörpers (50, 150) zusammenwirkt, wobei das Schneidwerkzeug (70, 170) mit einer eine Vorspannung erzeugenden Spannvorrichtung (60, 160) zusammenwirkt, die von wenigstens einem Federelement (62, 162, 163) in wenigstens einer Richtung versetzbar ist.

2. Schneidgerät nach Anspruch 1, **dadurch gekennzeichnet, dass** die Spannvorrichtung (60, 160) eine drehbar gelagerte Rolle (61, 161) mit einer umlaufend ausgebildeten Vertiefung (64, 164) aufweist.

3. Schneidgerät nach Anspruch 2, **dadurch gekennzeichnet, dass** sich die Vertiefung (64, 164) der Rolle (61, 161) in einer Ebene erstreckt, die gegenüber jener Ebene in der sich die Vertiefung (51, 151) des ringförmigen Trägerkörpers (50, 150) erstreckt, parallel versetzt angeordnet ist.

4. Schneidgerät nach einem der Ansprüche 1 bis 3, **dadurch gekennzeichnet, dass** zumindest zwischen dem ringförmigen Trägerkörper (150) und dem Schneidwerkzeug (170) ein endlos ausgebildetes Übertragungelement (180) angeordnet ist.

5. Schneidgerät nach Anspruch 4, **dadurch gekennzeichnet, dass** das Übertragungselement (180) von einem Riemen gebildet ist, dessen Innenkontur im wesentlichen der Kontur der beiden Vertiefungen (151, 164) und dessen Aussenkontur im wesentlichen der Kontur des Schneidwerkzeuges (170) entspricht.

6. Schneidgerät nach einem der Ansprüche 1 bis 5, **dadurch gekennzeichnet, dass** der Antrieb des Schneidwerkzeuges (70, 170) mittels eines Antriebsrades (20, 120) erfolgt, das zumindest mit dem ringförmigen Trägerkörper (50, 150) zusammenwirkt,

7. Schneidgerät nach einem der Ansprüche 4 bis 6, **dadurch gekennzeichnet**, das Antriebsrad (120) unter Zwischenlage des Übertragungselementes (180) mit dem ringförmigen Trägerkörper (150) zusammenwirkt.

8. Schneideinrichtung nach Anspruch 6 oder 7, **dadurch gekennzeichnet, dass** das Antriebsrad (20, 120) von einer Führungsrolle gebildet ist, die neben wenigstens zwei weiteren Führungsrollen (30, 40, 130, 140) ausserhalb vom Rotationszentrum des ringförmigen Trägerkörpers (50, 150) angeordnet sind.

## Claims

1. Handheld cutting apparatus for processing rock, concrete or the like with a cutting device (90, 190) comprising a rotary ringshaped support body (50, 150) and a plurality of cutting elements (71, 171) which co-act with at least a portion of the periphery of the support body (50, 150), **characterised in that** that the cutting elements (71, 171) are part of a beltshaped and continuously designed cutting tool (70, 170) which co-acts with a peripherally designed recess (51, 151) of the ringshaped support body (50, 150); and
the cutting tool (70, 170) co-acts with a pre-tension generating tensioning device (60, 160);
transposable by at least one spring element (62, 162, 163) in at least one direction.

2. Cutting apparatus according to Claim 1, **characterised in that** the tensioning device (60, 160) comprises a rotary mounted roller (61, 161) with a peripherally designed recess (64, 164).

3. Cutting apparatus according to Claim 2, **characterised in that** the recess (64, 164) of the roller (61, 161) extends in a plane which is arranged in parallel relative to the plane in which the recess (51, 151) of the ringshaped support body (50, 150) extends.

4. Cutting apparatus according to one of Claims 1 to 3, **characterised in that** a continuously designed transmission element (180) is arranged at least between the ringshaped support body (150) and the cutting tool (170).

5. Cutting apparatus according to Claim 4, **characterised in that** the transmission element (180) is formed by a belt the inside contour of which essentially corresponds with the contour of both recesses (151, 164) and the outside contour of which corresponds essentially with the contour of the cutting tool (170).

6. Cutting apparatus according to one of Claims 1 to 5, **characterised in that** the drive of the cutting tool (70, 170) is by means of a drivewheel (20, 120) which co-acts at least with the ringshaped support body (50, 150).

7. Cutting apparatus according to one of Claims 4 to 6, **characterised in that** the drivewheel (120) co-acts with the ringshaped support body (150) with the transmission element (180) thereinbetween.

8. Cutting apparatus according to Claim 6 or 7, **characterised in that** the drivewheel (20, 120) is formed by a guide roller which are, along at least two additional guide rollers (30, 40, 130, 140) arranged outside the rotation centre of the ringshaped support body (50, 150).

## Revendications

1. Outil de coupe à guidage manuel pour le travail de la roche, du béton ou analogue, comprenant un dispositif de coupe (90, 190) qui comporte un corps porteur annulaire tournant (50, 150) et plusieurs corps de coupe (71, 171) qui coopèrent avec au moins une partie de la circonférence du corps porteur (50, 150), **caractérisé en ce que** les corps de coupe (71, 171) font partie d'un ensemble de coupe conformé en bande et sans fin (70, 170) qui coopère avec un renfoncement (51, 151) ménagé sur la périphérie du corps porteur annulaire (50, 150), l'ensemble de coupe (70, 170) coopérant avec un dispositif de tension (60, 160) produisant une précontrainte, et pouvant être déplacé dans au moins une direction par au moins un élément de ressort (62, 162, 163).

2. Outil de coupe selon la revendication 1, **caractérisé en ce que** le dispositif de tension (60, 160) comporte une poulie montée à rotation (61, 161) avec un renfoncement (64, 164) ménagé sur sa périphérie.

3. Outil de coupe selon la revendication 2, **caractérisé en ce que** le renfoncement (64, 164) de la poulie (61, 161) s'étend dans un plan qui est décalé parallèlement au plan dans lequel s'étend le renfoncement (51, 151) du corps porteur annulaire (50, 150).

4. Outil de coupe selon une des revendications 1 à 3, **caractérisé en ce qu'**un élément de transmission conformé sans fin (180) est disposé entre le corps porteur annulaire (150) et l'ensemble de coupe (170).

5. Outil de coupe selon la revendication 4, **caractérisé en ce que** l'élément de transmission (180) est formé par une courroie dont le contour intérieur correspond pour l'essentiel au contour des deux renfoncements (151, 164) et dont le contour extérieur correspond pour l'essentiel au contour de l'ensemble de coupe (170).

6. Outil de coupe selon une des revendications 1 à 5, **caractérisé en ce que** l'entraînement de l'ensemble de coupe (70, 170) s'effectue au moyen d'une roue d'entraînement (20, 120) qui coopère au moins avec le corps porteur annulaire (50, 150).

7. Outil de coupe selon une des revendications 4 à 6, **caractérisé en ce que** la roue d'entraînement (120) coopère avec le corps porteur annulaire (150) avec interposition de l'élément de transmission (180).

8. Dispositif de coupe selon la revendication 6 ou 7, **caractérisé en ce que** la roue d'entraînement (20, 120) est formée par un galet de guidage qui, avec au moins deux autres galets de guidage (30, 40, 130, 140), est disposé à l'extérieur du centre de rotation du corps porteur annulaire (50, 150).
